# EUROPEAN PATENT SPECIFICATION

(11) **EP 2 559 584 B1**
(45) Date of publication and mention of the grant of the patent: **03.10.2018**
(21) Application number: 12003741.1
(22) Date of filing: 10.05.2012
(51) Int. Cl.: B60L 3/00, B60L 3/04, B60L 11/18

(54) **Charge disruption monitoring and notification system**
System zur Überwachung und Mitteilung von Ladungsunterbrechungen
Système de contrôle et notification de rupture de charge

(30) Priority: 13.07.2011 US 201113182359
(43) Date of publication of application: 20.02.2013
(73) Proprietor: Tesla, Inc., Palo Alto, CA 94304 (US)
(72) Inventor: Kelty, Kurt Russell, Palo Alto, CA 94301 (US); Kohn, Scott Ira, Redwood City, CA 94061 (US)
(74) Representative: Liesegang, Eva

(56) References cited:
- JP-A- 2011 050 162
- US-A1- 2009 021 385
- US-A1- 2010 211 643
- US-A1- 2011 144 823

## Description

### FIELD OF THE INVENTION

The present invention relates generally to electric vehicle charging systems and, more particularly, to a system for monitoring and reporting disruptions that may occur during electric vehicle charging.

### BACKGROUND OF THE INVENTION

An extremely large percentage of the world's vehicles run on gasoline using an internal combustion engine. The use of such vehicles, more specifically the use of vehicles which rely on fossil fuels, e.g., gasoline, creates two problems. First, due to the finite size and limited regional availability of such fuels, major price fluctuations and a generally upward pricing trend in the cost of gasoline are common, both of which can have a dramatic impact at the consumer level. Second, fossil fuel combustion is one of the primary sources of carbon dioxide, a greenhouse gas, and thus one of the leading contributors to global warming. Accordingly, considerable effort has been spent on finding alternative drive systems for use in both personal and commercial vehicles.

Electric vehicles, due to their cleaner and more efficient drive systems, offer one of the most promising alternatives to vehicles that use internal combustion drive trains. To be successful, however, an electric vehicle must meet consumers' expectations relative to performance, range, reliability, lifetime and cost. These expectations, in turn, place considerable importance on thedesign,configuration and implementation of the electric vehicle's rechargeable batteries. Clearly a critical aspect of the rechargeable batteries, especially from a consumer's point of view, is the ease and dependability by which the batteries may be recharged, either at home, work or at a public charging station.

Often when discussing the transition between a society dependent upon combustion vehicles and one that relies heavily on electric vehicles, the discussion turns to the need for a charging infrastructure that would make it easy for the electric vehicle owner to charge their vehicle when they are away from their primary charging station (e.g., home charging station). While an infrastructure of charging stations is clearly critical to gaining wide-spread acceptance of electric vehicles, a secondary issue arises with respect to the dependability of such charging stations.

The owner of a conventional vehicle utilizing a combustion motor is able to fill their vehicle's gas tank in a matter of a few minutes. As the vehicle's driver typically fills their car's gas tank, or at least is in attendance during the filling operation, there is little question as to the amount of gasoline that has been added to their car. In contrast, since an electric vehicle may take many hours to fully charge, depending upon the batteries, depth of charge depletion, charging system, etc., the owner/driver of an electric vehicle is rarely in attendance during the entire charging operation. As such, if the charging operation is disrupted, the driver will not be aware of the problem until they are ready to use their car, at which point it may be too late to rectify the problem and obtain a sufficient charge to meet the owner's driving requirements.
JP 2011 050 162 is regarded as the closest prior art and discloses a notification for notifying the user of an interruption of power supply when charging a vehicle from household power source. A communication unit transmits a signal indicating the interruption.
US 2011/144 823 A1 discloses an electric vehicle charging system wherein the user may select to be notified on a separate device about a charging process.
US 2010/211 643 A1 discloses an electric vehicle charging station network server which detects an event of interest and transmits a notification message to a subscriber. The system allows the subscriber to provide notification message preferences for receiving notification messages upon certain events occurring.
US 2009/21 385 A1 discloses a method of communicating with an electric vehicle which can notify a user of problems with the battery during charging.

Accordingly, what is needed is a means for monitoring vehicle battery pack charging that notifies the user if there is a disruption during the charging operation. The present invention provides such a means.

### SUMMARY OF THE INVENTION

The present invention provides a system and method for notifying a party when an electric vehicle charging operation is unexpectedly disrupted.
The present invention provides a method according to claim 1 and a system according to claim 12. Embodiments are defined in the dependent claims.

In one aspect of the invention, the invention is a method that includes the steps of detecting initiation of a connection between the electric vehicle and the external battery pack charging source; monitoring operation of a battery pack charging system; issuing a command to a notification system to send a notification message to the party when a disruption in operation of the battery pack charging system is detected; evaluating a set of notification instructions stored in memory upon receipt of the command to send the notification message; and transmitting the notification message in accordance with the set of notification instructions. In at least one configuration, the step of monitoring battery pack charging system operation comprises the step of monitoring connection continuity between the electric vehicle and the battery pack charging source. The method may further comprise the step of determining whether the disruption is an authorized interruption of charging and if it is, not transmitting the notification message. The step of determining whether the disruption is authorized may include one or more of (i) determining user proximity to the electric vehicle, for example by determining if a device (e.g., key fob) containing a pre-identified radio-frequency identification (RFID) signal is proximate to the electric vehicle; (ii) determining if the electric vehicle is located in a predefined safe zone; (iii) determining if the current SOC of the electric vehicle's battery pack exceeds a preset target SOC, where the preset target SOC may be preset or calculated on the basis of achieving a preset driving range or calculated on the basis of achieving a driving range based on historical driving patterns or calculated on the basis of achieving a user provided preset driving range or calculated on the basis of traveling from the current location to a user provided target destination; and (iv) determining if a current battery pack operating condition (e.g., battery pack temperature) is within, or outside of, a preset target range for the battery pack operating condition. Notification instructions, including the preferred format for the notification message, may be input via a user interface in communication with the system controller. The step of transmitting a notification message may include the step of transmitting the notification message via an over-the-air RF communication system (e.g.,a cellular wireless system or a satellite-based wireless system); using a text message; using an audio cue; using a graphical cue; using an email message; using a pre-recorded verbal message; by posting the notification message on a web page; via a third party application that periodically pings for notification messages; and/or using a third party notification system that obtains the initial notification message and then forwards that message in accordance with a preset set of notification rules.

In another aspect of the invention, a notification system for use with an electric vehicle is disclosed, the system including (i) an electric vehicle charging system coupleable to an external power source for charging the vehicle's battery pack; (ii) a power source monitor configured to monitor battery pack charging status; (iii) a system controller configured to receive status signals from the power source monitor and to issue notification commands in accordance with a set of notification instructions upon disruption of battery pack charging; and (iv) a notification system configured to transmit the notification message upon receipt of the notification command. The system may further comprise a memory coupled to the system controller for storing the set of notification instructions. The set of notification instructions preferably includes at least one criteria for accepting the change in battery pack charging status, indicating a disruption, as authorized. Criteria for accepting the change in battery pack charging status as authorized includes user/device proximity to the vehicle, achievement of a target battery pack SOC, and location of the vehicle within a safe zone.

A further understanding of the nature and advantages of the present invention may be realized by reference to the remaining portions of the specification and the drawings.

### BRIEF DESCRIPTION OF THE DRAWINGS

Fig. 1 illustrates the basic elements of a system that is intended to monitor battery pack charging in an electric vehicle and notify the user or other designated party when an unexpected disruption occurs during the charging cycle;
Fig. 2 illustrates the basic methodology of the invention;
Fig. 3 illustrates an alternate procedure for determining whether or not to send out a notification message in response to the interruption of vehicle charging;
Fig. 4 illustrates a specific embodiment of the procedure shown in Fig. 3;
Fig. 5 illustrates an alternate embodiment of the system shown in Fig. 1, modified to include a user RFID reader;
Fig. 6 illustrates another specific embodiment of the procedure shown in Fig. 3;
Fig. 7 illustrates an alternate embodiment of the system shown in Fig. 1, modified in accordance with the procedure shown in Fig. 6;
Fig. 8 illustrates another specific embodiment of the procedure shown in Fig. 3;
Fig. 9 illustrates an alternate embodiment of the system shown in Fig. 1, modified in accordance with the procedure shown in Fig. 8; and
Fig. 10 illustrates a variation of the procedure illustrated in Fig. 3.

### DESCRIPTION OF THE SPECIFIC EMBODIMENTS

In the following text, the terms "battery", "cell",and "battery cell" may be used interchangeably and may refer to any of a variety of different cell types, chemistries and configurations including, but not limited to, lithium ion (e.g., lithium iron phosphate, lithium cobalt oxide, other lithium metal oxides, etc.), lithium ion polymer, nickel metal hydride, nickel cadmium, nickel hydrogen, nickel zinc, silver zinc, or other battery type/configuration. The term "battery pack"as used herein refers to multiple individual batteries contained within a single piece or multi-piece housing, the individual batteries electrically interconnected to achieve the desired voltage and capacity for a particular application. The terms "battery" and "battery system" may be used interchangeably and as used herein refer to an electrical energy storage system that has the capability to be charged and discharged such as a battery, battery pack, capacitor or supercapacitor. The term "electric vehicle" as used herein refers to either an all-electric vehicle, also referred to as an EV, plug-in hybrid vehicles, also referred to as a PHEV, or a hybrid vehicle (HEV), a hybrid vehicle utilizing multiple propulsion sources one of which is an electric drive system.It should be understood that identical element symbols used on multiple figures refer to the same component, or components of equal functionality.Additionally, the accompanying figures are only meant to illustrate, not limit, the scope of the invention and should not be considered to be to scale.

During the charging cycle for an electric vehicle, charging may be disrupted for any of a variety of reasons. For example, charging may be disrupted due to a disruption in the external power source, due to a failure in the charging system, due to a problem in the linkage between the external power source and the charging system or between the charging system and the batteries, or due to someone either accidentally or deliberately removing the charging cable. Regardless of the cause of the disruption in the charging cycle, by monitoring the charging cycle in accordance with the present invention, the user can be notified of an unexpected disruption, thus allowing the user to immediately remedy the problem, or at least take precautionary steps to limit the effects of the disruption on their driving schedule. Furthermore, the present invention may be configured to distinguish between a nuisance disruption, for example when charging is accidentally or intentionally disrupted prior to the conclusion of the charge cycle, and a planned disruption, for example when the vehicle has finished the charge cycle and the user disengages the link to the charging power source, only notifying the user when the disruption is undesirable and unplanned.

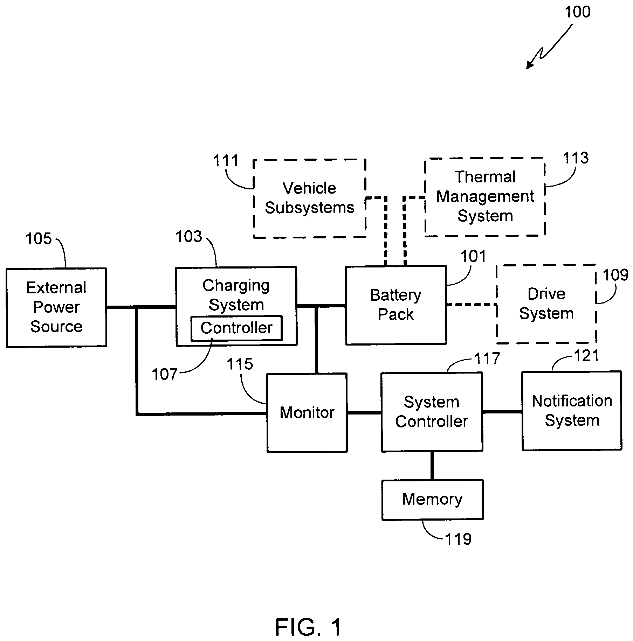

Fig. 1 illustrates the basic elements of a system 100 that is intended to monitor battery pack charging in an electric vehicle and notify the user or other party when an unexpected disruption occurs during the charging cycle. As shown, battery pack 101 is coupled to a charging system 103. Battery pack 101 includes at least one, and typically hundreds or thousands of rechargeable cells. It will be appreciated that the invention is not limited to a particular type of battery or battery pack configuration and instead is useful for any type of rechargeable battery including, but not limited to, metal-air cells, lithium ion cells (e.g., lithium iron phosphate, lithium cobalt oxide, other lithium metal oxides, etc.), lithium ion polymercells, nickel metal hydridecells, nickel cadmiumcells, nickel hydrogencells, nickel zinccells, silver zinccells, etc.

Charging system 103 may be integrated within the electric vehicle, integrated within the charging station, or configured as a stand-alone charger that is coupled between the external power source 105 (e.g., the power grid) and the vehicle's battery pack. Note that as its name implies, the external power source 105 is external to the vehicle. Accordingly, the present invention is not applicable to internal power generators such as a regenerative braking system that may be used to at least partially recharge the vehicle's batteries. As previously noted, the present system is intended for use when the vehicle's operator (e.g., driver or owner) is not present during battery charging. Clearly this scenario does not apply to a regenerative, or similar, charging system that is intended for use while the car is under the direct control of the driver/owner.

During battery pack charging, a controller 107, coupled to charger 103, controls operation of the charger, preferably controlling not only its status (on/off), but also its charge rate. Controller 107 may be integrated within, or separate from, charging system 103. As controller 107 typically takes into account a variety of battery parameters in order to determine the appropriate charge rate, etc., parameters such as the state-of-charge (SOC), temperature, age and overall capacity of the batteries, controller 107 is often integrated within the vehicle and/or the vehicle's control system. Alternately, battery pack parameters may be communicated to the controller, for example using a communication link between the controller and the vehicle. A benefit of integrating controller 107 into the vehicle is that it makes it easier for the vehicle to be charged in a variety of situations with various chargers while still allowing the vehicle's system to determine optimal charge rate, etc.

It should be understood that while the various electric vehicle systems and components essential to the present invention are discussed in detail herein, non-essential vehicle systems/components are not necessarily described. For example, clearly battery pack 101 is coupled to a drive train 109, shown in phantom in Fig. 1. Drive train 109 may use a single electric motor or multiple electric motors coupled to one or both axles. Similarly, the invention is not limited to a specific type/configuration of transmission (e.g., single speed, multi-speed) or a specific type/configuration of differential (e.g., open, locked or limited slip). Typically battery pack 101 is coupled to the drive motor via a power control system that is used to insure that the power delivered to the motor is of the desired voltage, current, waveform, etc. As such, power control system may be comprised of passive power devices (e.g., transient filtering capacitors and/or inductors), active power devices (e.g., semiconductor and/or electromechanical switching devices, circuit protection devices, etc.), sensing devices (e.g., voltage, current, and/or power flow sensors, etc.), logic control devices, communication devices, etc.

In addition to providing power to the drive motor, battery pack 101 is expected to provide power to any number of auxiliary components requiring electric power, these auxiliary vehicle subsystems and components represented in Fig. 1 by vehicle subsystems 111. Vehicle subsystems 111 may include, but are not limited to, vehicle lights (e.g., driving lights, courtesy lighting, etc.), entertainment systems (e.g., conventional and/or satellite radio, CD player, DVD player, MP3 player, etc.), navigation system, various vehicle control systems, a user interface, etc. Battery pack 101 may also be coupled to one or more thermal control systems 113 that are used to insure that the batteries, as well as other components, are maintained in the desired temperature range.

In accordance with the invention, a monitor 115 is used to detect the flow of power from the external power source 105 and charging system 103 to battery pack 101. Monitor 115 may be configured to monitor the connection between the external power source and the vehicle, and/or to monitor operation of charging system 103, and/or to monitor the input to charging system 103, and/or to monitor the output of charging system 103. Preferably, monitor 115 is used to detect not only power disruptions, but also the characteristics of the power (e.g., 120 VAC @ 16 A or 208/240 VAC @ 30 A), thus allowing additional details to be communicated to the user regarding charging system performance.

Monitor 115 is coupled to a system controller 117, controller 117 using the information provided by monitor 115 to determine an appropriate course of action when a power disruption is detected. In addition to a control processor, controller 117 may also include a memory 119 for storing a preset set of control instructions. Memory 119 may be comprised of flash memory, a solid state disk drive, a hard disk drive, or any other memory type or combination of memory types. Alternately, the preset set of control instructions may be stored in memory that is remote from the system controller 117 and the electric vehicle, for example located at a third party site (e.g., vehicle manufacturer). It will be appreciated that controller 117 may be a stand-alone controller or integrated into another vehicle control system, for example a charging system controller or a vehicle management system.

Controller 117 is coupled to at least one type of notification system 121 that is used to communicate to the user that vehicle battery pack charging has been disrupted. Preferably notification system 121 is a wireless communication system, thus allowing the user or other designated party to be notified of a charging disruption regardless of their location. It will be appreciated that the present invention is not limited to a specific type of notification system/communication link and as such, may use any of a variety of over-the-air RF communication systemsto send a notification message (e.g., text, voice, audio cue, graphical cue or other form). Exemplary systems utilize cellular or satellite-based wireless systems using any of a variety of different standards (e.g., GSM EDGE, UMTS, CDMA2000, DECT, WiMAX, etc.)If voice messaging is used, preferably pre-recorded messages are utilized, thus avoiding the need for an operator or similar party. Notification messages may also be sent to the user or other designated recipient using email. Notification messages may also be posted, for example on a web page that the user can access when desired. Notification messages may also be sent to a third party notification system that then forwards the message in accordance with a preset set of rules, for example using push technology or another method of forwarding a notification message. Notification messages may also be acquired by a third party application, either running in the background or being run explicitly, on a phone, computer or other independent device that has the capability to periodically ping for data updates.Note that while it is preferable to use an open communication system, such as a cellular phone, a dedicated communication system may also be used.

In at least one embodiment envisioned by the inventors, the notification issued by the notification system 121 is simply a local alarm, for example honking the horn, flashing the lights, etc. This type of notification scheme is most likely of use when the vehicle is parked at home and the user is simply concerned that a family member may unplug the vehicle before the battery pack has reached the intended SOC. Alternately, alarm notification may be used, alone or in conjunction with a standard notification message (e.g., text, pre-recorded message, etc.), when the user is parked at a public charging station and they are concerned that someone else might intentionally disconnect the car, for example to gain access to the charging station for their own vehicle. Preferably the user is able to preset the notification format to be used when charging is disrupted, one of the options being an alarm. More preferably the user is able to preset the notification format to be used based on vehicle location (e.g., local alarm if the vehicle is in the garage and wireless transmission of the notification message if the vehicle is not in the garage).

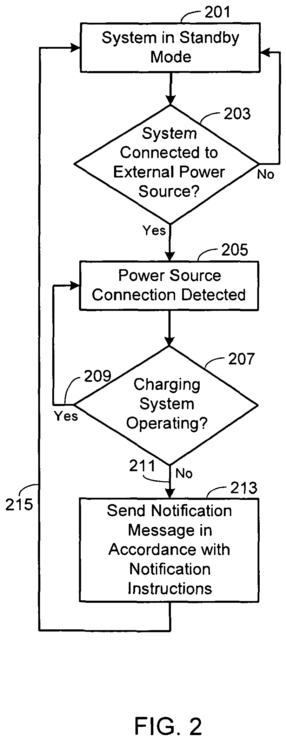

In general, and as illustrated in Fig. 2, initially the electric vehicle is in a stand-by mode (step 201). Once the electric vehicle is coupled to external power source 105 (step 203), monitor 115 detects the coupling (step 205), thereby prompting system controller 117 to begin monitoring the coupling to verify the charging system operation(step 207). As long as charging continues (step 209), the system controller 117 only performs a monitoring function using the input from monitor 115. If the connection to the charging source is interrupted (step 211), then controller 117 issues a command to notification system 121 to send a notification message to one or more designated parties (step 213). After the notification message is sent, preferably the system returns to the standby mode (step 215).

Typical parties that might be designated to receive the notification message include, but are not limited to, the vehicle's owner, the vehicle's driver, the last party that drove the car, a third-party notification service (e.g., vehicle manufacturer, car dealer, independent notification service, etc.) or other party. Preferably controller 117 is configured to accept notification instructions either via a user interface integrated into the vehicle, or remotely using a communication link between the vehicle and a remote input device (i.e., remotely located computer, smart phone, or other input device). Notification instructions include the party or parties to be notified if there is a disruption in charging. Preferably the notification instructions also allow the preferred notification format to be input (e.g., text, voice mail, email, etc.) as well as notification contact information (e.g., telephone number, email address, etc.). The notification instructions may also include whether a single notification message or multiple notification messages are to be sent (e.g., at a preset frequency such as once every hour). The system may also be configured to send notification messages bemultiple parties, and preferably multiple times, continuing until either the vehicle is reconnected to the charging source or the user disarms the notification system.

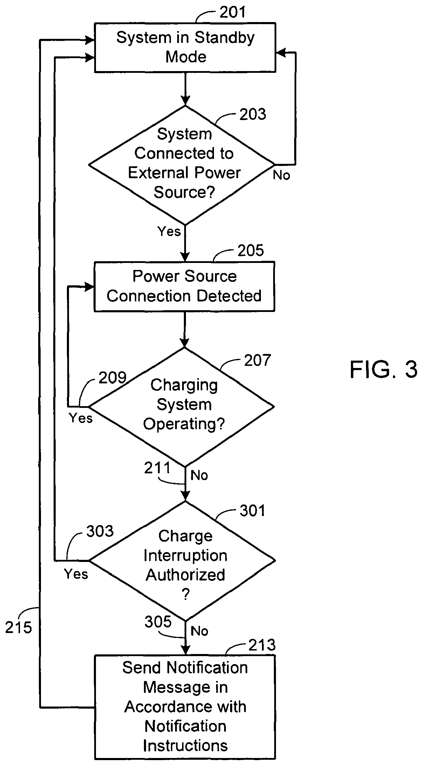

In an alternate method illustrated in Fig. 3, if the connection to the charging source is interrupted (step 211), then system controller 117 determines if the charge interruption is authorized (step 301).If the interruption is authorized (step 303), then the system returns to the standby mode (step 303). If controller 117 determines that the interruption is not authorized (step 305), then a command to notification system 121 is issued, causing the notification system to send a notification message to the designated party or parties following the preset notification instructions (step 213).

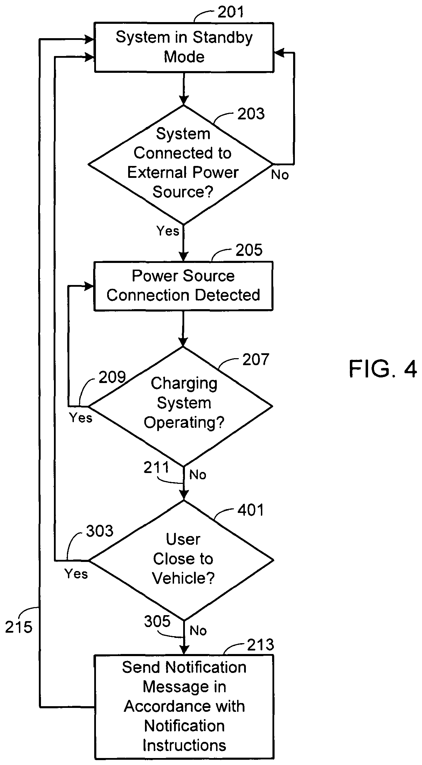

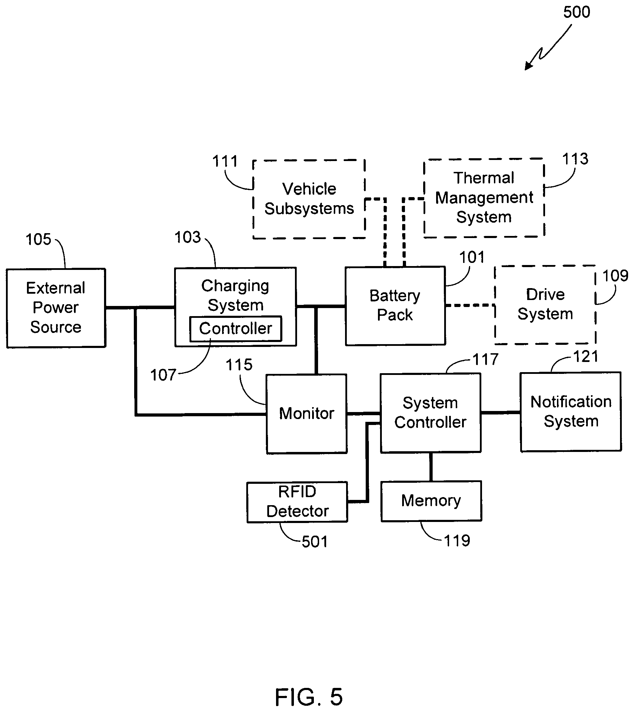

During step 301, system controller 117 may use any of a variety of criteria for determining if the disruption that was detected during vehicle charging was authorized. For example and as illustrated in Fig. 4, controller 117 may use user proximity to the vehicle, and therefore user proximity to the charging system and the charging cable/coupler, to determine if the interruption was authorized (step 401). The presumption in this embodiment is that if the user, or another authorized party, is close to the vehicle, then a disruption during charging must be authorized. Various means may be used by system controller 117 to determine whether or not the user is close by, including the use of a key fob or similar object in which user identification is embedded. In exemplary system 500, illustrated in Fig. 5, a detector 501 such as an RFID (radio-frequency identification) reader is mounted within the vehicle and coupled to controller 117. When controller 117 detects, via monitor 115, that charging has been disrupted, it queries RFID detector 501 to determine if a device, such as a key fob, containing a pre-identified RFID tag is nearby (step 401), the assumption being that only the user or another authorized partywould have a device containing the pre-identified RFID tag. If the user is nearby, then the system returns to standby (step 303). If the user is not nearby, then the system transmits the notification message in accordance with the notification instructions stored in memory 119. It will be appreciated that other means may be used by the system to monitor proximity of the user to the car. For example, if the vehicle is unlocked, a condition that may be detected and acquired by the system controller, then the controller can be set-up via the preset notification instructions to assume that the user is nearby, thereby meeting the requirements of step 401.

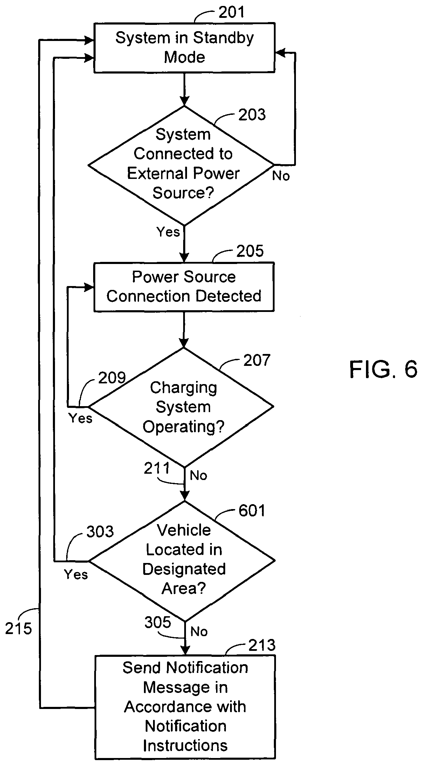

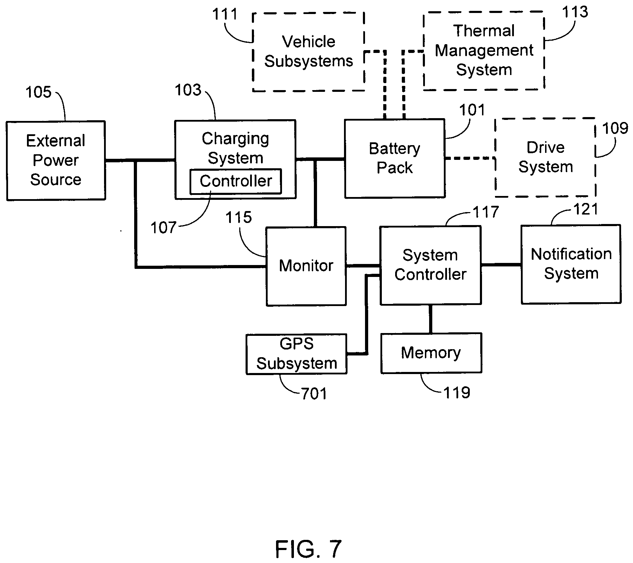

Figs. 6 and 7 illustrate another specific configuration of the embodiment shown in Fig. 3. In this configuration, system controller 117 determines if the vehicle is within a "safe" zone, safe zones being defined as an area or zone in which the user is not concerned about charge disruptions. Exemplary safe zones might include the user's garage, a work garage, or similar area. Alternately, the safe zone may correspond to a location, such as a target destination, entered into the vehicle's GPS system. Preferably the system controller allows the user to input one or more "safe" zones within their notification instructions. By monitoring the vehicle's location and comparing that location to a designated safe zone (step 601), system controller 117 is able to determine whether or not to issue a notification message once an interruption in battery pack charging is detected (step 211). In a typical and preferred configuration, if the vehicle is located in a pre-designated safe zone, then no notification message is sent while if the vehicle is not in such a safe zone, then the controller follows the preset notification instructions. Determination of the vehicle's location relative to a pre-designated safe zone preferably utilizes a GPS subsystem (e.g., GPS subsystem 701) such as that used by the vehicle for its navigation system. Alternately, system controller 117 may identify safe zones by the proximity of a service set identifier (SSID) associated with a specific local area network, vehicle location relative to one or more cellular tower positions, or other means.

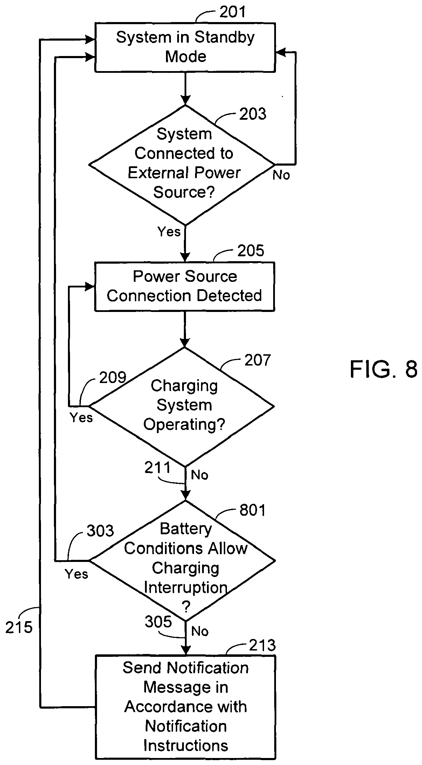

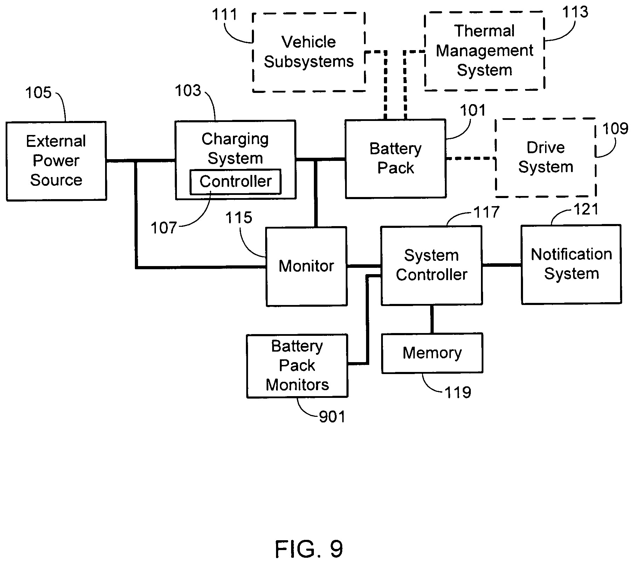

Figs. 8 and 9 illustrate yet another specific configuration of the embodiment shown in Fig. 3. In this configuration, system controller 117 is coupled to one or more battery pack monitors 901. Preferably battery pack monitors 901 are the same sensors that are used by the vehicle management system to monitor battery health and operational characteristics. For example, by monitoring battery pack SOC and comparing that SOC to a target SOC, system controller 117 can determine whether or not a disruption of the charging system is of sufficient concern to warrant sending a notification message to the user or other designated party. Note that the target SOC used during this step need not be the same target SOC that is used by the vehicle management system (e.g., battery pack monitoring and management subsystem) to determine the maximum or the optimal SOC for battery pack charging. Rather, the target SOC used by controller 117 during this step may be a minimum SOC that the user has determined is a sufficient level of charge to meet their expected driving requirements, for example, sufficient charge to allow a 100 mile driving range. The target SOC may also be calculated by controller 117 based on achieving a minimum driving range, where the minimum driving range is preferably input by the user (or alternately, by another party) as one of the notification instructions. The target SOC may also be determined by controller 117 using the user's driving patterns as a basis. For example, if the vehicle is typically driven for less than 30 miles per day, the controller may set a target SOC that is sufficient to enable the vehicle to achieve the typical driving range (e.g., 30 miles) plus a safety margin (e.g., 20 miles). The target SOC may also be determined by controller 117 based on driving from the current location to a preset target location, for example, a preset and specific target destination input by the user. In these configurations, as long as the battery pack has been charged sufficiently to meet the target SOC, no notification message will be sent to the user. A notification message would only be sent if vehicle charging is disrupted prior to reaching the target SOC.

It will be appreciated that while battery pack SOC is preferred as the battery pack parameter to be used in step 801, other battery pack operating parameters may be used. For example, the charging system may be designed to terminate charging if the battery pack temperature is outside of a preset temperature range. In this configuration, if the system controller 117 determines that the monitored battery pack condition (e.g., temperature) warrants charging disruption, then it would not notify the user when charging disruption is detected (step 211). Note that as with other aspects of the invention, since the user is able to preset the conditions relating to notification messaging with the preset notification instructions, the user may or may not set-up the system to send a notification message when charging is disrupted due to a battery pack condition such as the battery pack temperature falling outside of the allowed range.

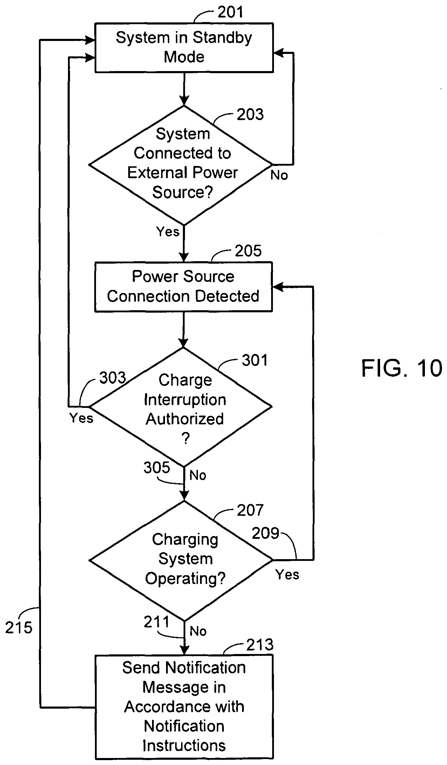

It should be understood that while preferred embodiments of the invention are described above, the inventors clearly envision minor variations of this process. For example, in Fig. 3 and the detailed configurations that follow, charge interrupt authorization (e.g., step 301) follows the step of detecting an interruption in the charging cycle. The same outcome can be achieved by reversing steps 207 and 301 as illustrated in Fig. 10. In this procedure the system is always monitoring conditions in order to determine if there are any conditions detected that would permit a disruption in the charging cycle to occur (step 301), conditions such as user proximity, vehicle location, or achieving the target SOC. If such a condition is detected (step 303), then the system goes back to a standby mode. If such a condition is not detected (step 305), then the system determines whether or not the charging system is still operating (step 207).

Accordingly, the disclosures and descriptions herein are intended to be illustrative, but not limiting, of the scope of the invention which is set forth in the appended claims.

## Claims

1. A method of notifying a party when operation of a battery pack charging system (103) for an electric vehicle is disrupted, the method comprising the steps of:
Detecting (205) initiation of a connection between said electric vehicle and a battery pack charging source (105), wherein said battery pack charging source (105) is external to said electric vehicle;
monitoring operation (207) of said battery pack charging system (103), wherein said step of monitoring operation of said battery pack charging system (103) is performed after said connection between said electric vehicle and said battery pack charging source (105) is detected;
issuing a command to a notification system (121) to send a notification message to said party, wherein said step of issuing said command is performed by a system controller (117), and wherein said step of issuing said command is performed if a disruption in said operation of said battery pack charging system (103) is detected; **characterized by** evaluating a set of notification instructions stored in a memory coupled to said notification system (121) upon receipt of said command to send said notification message, wherein the set of notification instructions including at least one criteria for accepting the change in battery pack charging status, indicating a disruption, as authorized; monitoring the electric vehicle's location; and
determining whether the disruption in said operation of said battery pack charging system (103) is an authorized interruption of charging; and
transmitting (213) said notification message in accordance with said set of notification instructions upon receipt of said command to send said notification message, wherein the user is able to preset the notification format to be used based on electric vehicle location which is a local alarm if the electric vehicle is in the garage and wireless transmission of the notification message if the electric vehicle is not in the garage.

2. The method of claim 1, wherein said step of monitoring operation (207) of said battery pack charging system (103) further comprises the step of monitoring connection continuity between said electric vehicle and said battery pack charging source (105), and wherein said step of issuing said command to said notification system (121) is performed by said system controller (117) if a disruption in said connection between said electric vehicle and said battery pack charging source (105) is detected.

3. The method of claims 1 or 2, further comprising the step of determining (301) whether said disruption is authorized, wherein said step of determining whether said disruption is authorized is performed prior to said step of transmitting said notification message, and wherein said step of transmitting said notification message is not performed if said disruption is authorized.

4. The method of claim 3, wherein said step of determining (301) whether said disruption is authorized further comprises the step of detecting (401) whether or not an authorized device is proximate to said electric vehicle, wherein if said authorized device is proximate to said electric vehicle then said disruption is authorized; or
wherein said step of determining (301) whether said disruption is authorized further comprises the steps of determining (601) a present location corresponding to said electric vehicle, comparing said present location to at least one predefined safe zone contained within said set of notification instructions, and authorizing said disruption if said present location corresponds to said predefined safe zone; or
wherein said step of determining (301) whether said disruption is authorized further comprises the steps of monitoring (801) a current state-of-charge (SOC) level corresponding to an electric vehicle battery pack (101), comparing said current SOC level to a preset target SOC level, and authorizing said disruption if said current SOC level exceeds said preset target SOC level.

5. The method of claim 4, wherein said preset target SOC level is calculated based on said electric vehicle battery pack (101) having sufficient SOC to achieve a preset driving range.

6. The method of claim 3, wherein said step of determining (301) whether said disruption is authorized further comprises the steps of monitoring a current battery pack temperature corresponding to an electric vehicle battery pack (101), comparing said current battery pack temperature to a preset range of temperatures, and authorizing said disruption if said current battery pack temperature is outside of said preset range of temperatures.

7. The method of any one of claims 1-6, further comprising the step of accepting said set of notification instructions and storing said set of notification instruction in said memory (119), wherein a user inputs said set of notification instructions via a user interface in communication with said system controller (117).

8. The method of any one of claims 1-7, wherein said step of transmitting (213) said notification message further comprises the step of transmitting said notification message via an over-the-air RF communication system, wherein said over-the-air RF communication system is selected from the group consisting of cellular wireless systems and satellite-based wireless systems, and wherein said step of transmitting said notification message further comprises the step of transmitting a text message or an email message or a pre-recorded verbal message.

9. The method of any one of claims 1-7, wherein said step of transmitting (213) said notification message further comprises the step of posting said notification message on a web page.

10. The method of any one of claims 1-7, wherein said step of transmitting (213) said notification message further comprises the step of transmitting said notification message to a third party notification system.

11. The method of any one of claims 1-7, wherein said step of transmitting (213) said notification message further comprises the step of activating an alarm system mounted to said electric vehicle.

12. A notification system using an electric vehicle and a method of notifying according to one of the claims 1-11, comprising:
an electric vehicle charging system (103) coupleable to a power source (105), wherein said power source (105) is external to said electric vehicle, and wherein said power source (105) provides charging power for a battery pack (101) mounted within said electric vehicle, said battery pack (101) providing power for at least one drive train motor (109);
a power source monitor (115) mounted within said electric vehicle and configured to monitor a battery pack charging status, wherein said monitor (115) detects when said power source (105) is coupled to said electric vehicle charging system (103);
a system controller (117) coupled to said power source monitor (115), said system controller (117) configured to receive a first status signal from said power source monitor (115) when said power source (105) is coupled to said electric vehicle charging system (103) and to receive a second status signal from said power source monitor (115) when a disruption in operation of said electric vehicle charging system power source (105) is detected, wherein said system controller (117) is configured to issue a notification command upon detection of a change in said battery pack (101)
charging status as evidenced by receipt of said second status signal after receipt of said first status signal, and wherein said system controller (117) is configured to issue said notification command in accordance with a set of notification instructions;
a memory (119) coupled to said system controller (117), wherein said memory stores (119) said set of notification instructions; and
a notification system (121) coupled to said system controller (117), wherein said notification system (121) is configured to transmit a notification message to a party externally located from said electric vehicle upon receipt of said notification command issued by said system controller (117), **characterized in that** the user is able to preset the notification format to be used based on electric vehicle location which is a local alarm if the electric vehicle is in the garage and wireless transmission of the notification message if the electric vehicle is not in the garage.

13. The notification system of claim 12, wherein said set of notification instructions includes at least one criteria for accepting said change in said battery pack charging status as authorized, and wherein said system controller (117) is configured to not issue a notification command when said change in said battery pack charging status is authorized.

14. The notification system of claim 13, wherein said criteria for accepting said change in said battery pack charging status as authorized includes at least one of user proximity to said electric vehicle, achievement of a target battery pack state-of-charge, and location of said electric vehicle in a pre-defined safe zone.

## Patentansprüche

1. Verfahren zum Benachrichtigen einer Partei, wenn der Betrieb eines Batteriepack-Ladesystems (103) für ein Elektrofahrzeug unterbrochen ist, wobei das Verfahren die folgenden Schritte umfasst:
Detektieren (205) einer Initiierung einer Verbindung zwischen dem Elektrofahrzeug und einer Batteriepack-Ladequelle (105), wobei sich die Batteriepack-Ladequelle (105) außerhalb des Elektrofahrzeugs befindet;
Überwachen des Betriebs (207) des Batteriepack-Ladesystems (103), wobei der Schritt des Überwachens des Betriebs des Batteriepack-Ladesystems (103) durchgeführt wird, nachdem die Verbindung zwischen dem Elektrofahrzeug und der Batteriepack-Ladequelle (105) detektiert worden ist;
Ausgeben eines Befehls an ein Benachrichtigungssystem (121), eine Benachrichtigungsmitteilung an die Partei zu senden, wobei der Schritt des Ausgebens des Befehls von einer Systemsteuerung (117) durchgeführt wird, und wobei
der Schritt des Ausgebens des Befehls durchgeführt wird, falls eine Unterbrechung im Betrieb des Batteriepack-Ladesystems (103) detektiert wird;
**gekennzeichnet durch**
Bewerten eines Satzes von Benachrichtigungsanweisungen, der in einem mit dem Benachrichtigungssystem (121) gekoppelten Speicher gespeichert ist, bei Empfang des Befehls, um die Benachrichtigungsmitteilung zu senden,
wobei der Satz von Benachrichtigungsanweisungen mindestens ein Kriterium zum Anerkennen der Änderung des Batteriepack-Ladezustands, das eine Unterbrechung anzeigt, als autorisiert enthält;
Überwachen der Standorts des Elektrofahrzeugs; und
Feststellen, ob die Unterbrechung des Betriebs des Batteriepacks-Ladesystems (103) eine autorisierte Ladeunterbrechung ist; und
Übertragen (213) der Benachrichtigungsmitteilung gemäß dem Satz von Benachrichtigungsanweisungen bei Empfang des Befehls, um die Benachrichtigungsmitteilung zu senden, wobei der Benutzer das Benachrichtigungsformat, das auf Basis des Standorts des Elektrofahrzeugs verwendet werden soll, voreinstellen kann, wobei es eine lokale Alarmierung ist, wenn sich das Elektrofahrzeug in der Garage befindet, oder eine drahtlose Übertragung der Benachrichtigungsmitteilung, wenn sich das Elektrofahrzeug nicht in der Garage befindet.

2. Verfahren nach Anspruch 1, wobei der Schritt des Überwachens des Betriebs (207) des Batteriepack-Ladesystems (103) ferner den Schritt des Überwachens des Fortbestehens der Verbindung zwischen dem Elektrofahrzeug und der Batteriepack-Ladequelle (105) umfasst, und wobei der Schritt des Ausgebens des Befehls an das Benachrichtigungssystem (121) von der Systemsteuerung (117) durchgeführt wird, wenn eine Unterbrechung der Verbindung zwischen dem Elektrofahrzeug und der Batteriepack-Ladequelle (105) detektiert wird.

3. Verfahren nach Anspruch 1 oder 2, ferner umfassend den Schritt des Feststellens (301), ob die Unterbrechung autorisiert ist, wobei der Schritt des Feststellens, ob die Unterbrechung autorisiert ist, vor dem Schritt des Übertragens der Benachrichtigungsmitteilung durchgeführt wird und wobei der Schritt des Übertragens der Benachrichtigungsmitteilung nicht durchgeführt wird, wenn die Unterbrechung autorisiert ist.

4. Verfahren nach Anspruch 3, wobei der Schritt des Feststellens (301), ob die Unterbrechung autorisiert ist, ferner den Schritt des Detektierens (401), ob sich eine autorisierte Vorrichtung in der Nähe des Elektrofahrzeugs befindet oder nicht, umfasst, wobei die Unterbrechung dann autorisiert ist, wenn sich die autorisierte Vorrichtung in der Nähe des Elektrofahrzeugs befindet; oder
wobei der Schritt des Feststellens (301), ob die Unterbrechung autorisiert ist, ferner die Schritte des Feststellens (601) eines gegenwärtigen Standorts, der dem Elektrofahrzeug entspricht, des Vergleichens des gegenwärtigen Standorts mit mindestens einem vordefinierten sicheren Bereich, der im Satz von Benachrichtigungsanweisungen enthalten ist, und des Autorisierens der Unterbrechung, wenn der gegenwärtige Standort dem vordefinierten sicheren Bereich entspricht, umfasst; oder
wobei der Schritt des Feststellens (301), ob die Unterbrechung autorisiert ist, ferner die Schritte des Überwachens (801) eines aktuellen Ladezustand(SOC, state-of-charge)-Niveaus, das einem Batteriepack (101) eines Elektrofahrzeugs entspricht, des Vergleichens des aktuellen SOC-Niveaus mit einem voreingestellten Soll-SOC-Niveau und des Autorisierens der Unterbrechung, wenn das aktuelle SOC-Niveau das voreingestellte Soll-SOC-Niveau überschreitet, umfasst.

5. Verfahren nach Anspruch 4, wobei das voreingestellte Soll-SOC-Niveau auf der Basis des Batteriepacks (101) eines Elektrofahrzeugs, das einen ausreichenden Ladezustand aufweist, um eine voreingestellte Reichweite zu erzielen, berechnet wird.

6. Verfahren nach Anspruch 3, wobei der Schritt des Feststellens (301), ob die Unterbrechung autorisiert ist, ferner die Schritte des Überwachens einer aktuellen Temperatur des Batteriepacks, der einem Batteriepack (101) eines Elektrofahrzeugs entspricht, des Vergleichens der aktuellen Temperatur des Batteriepacks mit einem voreingestellten Temperaturenbereich und des Autorisierens der Unterbrechung, wenn die aktuelle Temperatur des Batteriepacks außerhalb des voreingestellten Temperaturenbereichs liegt, umfasst.

7. Verfahren nach einem der Ansprüche 1 - 6, ferner umfassend die Schritte des Annehmens des Satzes von Benachrichtigungsanweisungen und des Speicherns des Satzes von Benachrichtigungsanweisungen im Speicher (119),
wobei ein Benutzer den Satz von Benachrichtigungsanweisungen über eine Benutzerschnittstelle eingibt, die in Kommunikation mit der Systemsteuerung (117) steht.

8. Verfahren nach einem der Ansprüche 1 - 7, wobei der Schritt des Übertragens (213) der Benachrichtigungsmitteilung ferner den Schritt des Übertragens der Benachrichtigungsmitteilung über ein Luft-RF-Kommunikationssystem umfasst, wobei das Luft-RF-Kommunikationssystem ausgewählt ist aus der Gruppe bestehend aus drahtlosen Zellensystemen und satellitengestützten Drahtlossystemen und wobei der Schritt des Übertragens der Benachrichtigungsmitteilung ferner den Schritt des Übertragens einer SMS oder einer E-Mail-Mitteilung oder einer voraufgezeichneten Sprachnachricht umfasst.

9. Verfahren nach einem der Ansprüche 1 - 7, wobei der Schritt des Übertragens (213) der Benachrichtigungsmitteilung ferner den Schritt des Postens der Benachrichtigungsmitteilung auf einer Webseite umfasst.

10. Verfahren nach einem der Ansprüche 1 - 7, wobei der Schritt des Übertragens (213) der Benachrichtigungsmitteilung ferner den Schritt des Übertragens der Benachrichtigungsmitteilung an ein Benachrichtigungssystem einer Drittpartei umfasst.

11. Verfahren nach einem der Ansprüche 1 - 7, wobei der Schritt des Übertragens (213) der Benachrichtigungsmitteilung ferner den Schritt des Aktivierens eines Alarmierungssystems umfasst, das am Elektrofahrzeug montiert ist.

12. Benachrichtigungssystem, das ein Elektrofahrzeug und ein Verfahren zum Benachrichtigen nach einem der Ansprüche 1 - 11 verwendet und Folgendes umfasst:
ein Ladesystem (103) für ein Elektrofahrzeug, das an eine Leistungsquelle (105) angeschlossen werden kann, wobei sich die Leistungsquelle (105) außerhalb des Elektrofahrzeugs befindet und wobei die Leistungsquelle (105) Ladestrom für einen Batteriepack (101) bereitstellt, welcher im Elektrofahrzeug montiert ist, wobei der Batteriepack (101) Strom für mindestens einen Antriebsstrangmotor (109) bereitstellt;
einen Leistungsquellenmonitor (115), der innerhalb des Elektrofahrzeugs angebracht und ausgelegt ist, um einen Batteriepack-Ladezustand zu überwachen, wobei der Monitor (115) detektiert, wann die Leistungsquelle (105) an das Ladesystem (103) des Elektrofahrzeugs gekoppelt ist;
eine Systemsteuerung (117), die mit dem Leistungsquellenmonitor (115) verbunden ist, wobei die Systemsteuerung (117) konfiguriert ist, um ein erstes Zustandssignal von dem Leistungsquellenmonitor (115) zu empfangen, wenn die Leistungsquelle (105) mit dem Ladesystem (103) des Elektrofahrzeugs verbunden ist, und um ein zweites Zustandssignal von dem Leistungsquellenmonitor (115) zu empfangen, wenn eine Unterbrechung des Betriebs der Leistungsquelle (105) für das Ladesystem des Elektrofahrzeugs detektiert wird, wobei die Systemsteuerung (117) ausgelegt ist, um einen Benachrichtigungsbefehl nach der Detektion einer Änderung des Batteriepacks-Ladezustands (101) auszugeben, die durch den Empfang des zweiten Zustandssignals nach dem Empfang des ersten Zustandssignals nachgewiesen ist, und wobei die Systemsteuerung (117) konfiguriert ist, um den Benachrichtigungsbefehl gemäß einem Satz von Benachrichtigungsanweisungen auszugeben;
einen Speicher (119), der mit der Systemsteuerung (117) gekoppelt ist, wobei der Speicher (119) den Satz von Benachrichtigungsanweisungen speichert; und
ein Benachrichtigungssystem (121), das mit der Systemsteuerung (117) gekoppelt ist, wobei das Benachrichtigungssystem (121) ausgelegt ist, um eine Benachrichtigungsmitteilung an eine sich außerhalb des Elektrofahrzeugs befindende Partei nach dem Empfang des von der Systemsteuerung (117) ausgegebenen Benachrichtigungsbefehls zu senden, **dadurch gekennzeichnet, dass** der Benutzer das Benachrichtigungsformat, das auf der Basis des Standorts des Elektrofahrzeugs verwendet werden soll, voreinstellen kann, wobei es eine lokale Alarmierung ist, wenn sich das Elektrofahrzeug in der Garage befindet, und eine drahtlose Übertragung der Benachrichtigungsmitteilung ist, wenn sich das Elektrofahrzeug nicht in der Garage befindet.

13. Benachrichtigungssystem nach Anspruch 12, wobei der Satz von Benachrichtigungsanweisungen mindestens ein Kriterium zum Anerkennen der Änderung des Batteriepack-Ladezustands als autorisiert aufweist und wobei die Systemsteuerung (117) ausgelegt ist, um keinen Benachrichtigungsbefehl auszugeben, wenn die Änderung des Batteriepack-Ladezustands autorisiert ist.

14. Benachrichtigungssystem nach Anspruch 13, wobei das Kriterium zum Anerkennen der Änderung des Batteriepack-Ladezustands als autorisiert mindestens eines von Folgendem umfasst: die Nähe des Benutzers zum Elektrofahrzeug, Erzielung eines Soll-Ladezustands des Batteriepacks und Standort des Elektrofahrzeugs in einem vordefinierten sicheren Bereich.

## Revendications

1. Procédé de notification d'une partie lorsque le fonctionnement d'un système de charge de bloc batterie (103) pour un véhicule électrique est perturbé, le procédé comprenant les étapes ci-dessous consistant à :
détecter (205) l'initiation d'une connexion entre ledit véhicule électrique et une source de charge de bloc batterie (105), dans lequel ladite source de charge de bloc batterie (105) est externe audit véhicule électrique ;
surveiller le fonctionnement (207) dudit système de charge de bloc batterie (103), dans lequel ladite étape de surveillance du fonctionnement dudit système de charge de bloc batterie (103) est mise en oeuvre dès lors que ladite connexion entre ledit véhicule électrique et ladite source de charge de bloc batterie (105) a été détectée ;
émettre une commande à un système de notification (121), visant à envoyer un message de notification à ladite partie ;
dans lequel ladite étape d'émission de ladite commande est mise en oeuvre par un contrôleur de système (117), et dans lequel ladite étape d'émission de ladite commande est mise en oeuvre si une perturbation dudit fonctionnement dudit système de charge de bloc batterie (103) est détectée ;
**caractérisé par** les étapes ci-dessous consistant à :
évaluer un ensemble d'instructions de notification stocké dans une mémoire couplée audit système de notification (121), suite à la réception de ladite commande visant à envoyer ledit message de notification, dans lequel l'ensemble d'instructions de notification inclut au moins un critère pour accepter le changement d'état de charge de bloc batterie, indiquant une perturbation, comme étant autorisé ;
surveiller l'emplacement du véhicule électrique ; et
déterminer si la perturbation dudit fonctionnement dudit système de charge de bloc batterie (103) correspond à une interruption de charge autorisée ; et
transmettre (213) ledit message de notification conformément audit ensemble d'instructions de notification, suite à la réception de ladite commande visant à envoyer ledit message de notification, dans lequel l'utilisateur est en mesure de prédéfinir le format de notification devant être utilisé, sur la base de l'emplacement du véhicule électrique, lequel est une alarme locale si le véhicule électrique est dans le garage, et lequel est une transmission sans fil du message de notification, si le véhicule électrique n'est pas dans le garage.

2. Procédé selon la revendication 1, dans lequel ladite étape de surveillance du fonctionnement (207) dudit système de charge de bloc batterie (103) comprend en outre l'étape de surveillance d'une continuité de connexion entre ledit véhicule électrique et ladite source de charge de bloc batterie (105), et dans lequel ladite étape d'émission de ladite commande audit système de notification (121) est mise en oeuvre par ledit contrôleur de système (117), si une perturbation dans ladite connexion entre ledit véhicule électrique et ladite source de charge de bloc batterie (105) est détectée.

3. Procédé selon la revendication 1 ou 2, comprenant en outre l'étape consistant à déterminer (301) si ladite perturbation est autorisée, dans lequel ladite étape consistant à déterminer si ladite perturbation est autorisée est mise en oeuvre avant ladite étape de transmission dudit message de notification, et dans lequel ladite étape de transmission dudit message de notification n'est pas mise en oeuvre si ladite perturbation est autorisée.

4. Procédé selon la revendication 3, dans lequel ladite étape consistant à déterminer (301) si ladite perturbation est autorisée comprend en outre l'étape consistant à détecter (401) si un dispositif autorisé est proche ou non dudit véhicule électrique, dans lequel, si ledit dispositif autorisé est proche dudit véhicule électrique, ladite perturbation est autorisée ; ou
dans lequel ladite étape consistant à déterminer (301) si ladite perturbation est autorisée comprend en outre les étapes consistant à déterminer (601) un emplacement en cours correspondant audit véhicule électrique, à comparer ledit emplacement en cours à au moins une zone sécurisée prédéfinie contenue dans ledit ensemble d'instructions de notification, et à autoriser ladite perturbation si ledit emplacement en cours correspond à ladite zone sécurisée prédéfinie ; ou
dans lequel ladite étape consistant à déterminer (301) si ladite perturbation est autorisée comprend en outre les étapes consistant à surveiller (801) un niveau d'état de charge en cours (SOC) correspondant à un bloc batterie de véhicule électrique (101), à comparer ledit niveau d'état SOC en cours à un niveau d'état SOC cible prédéfini, et à autoriser ladite perturbation si ledit niveau d'état SOC en cours dépasse ledit niveau d'état SOC cible prédéfini.

5. Procédé selon la revendication 4, dans lequel ledit niveau d'état SOC cible prédéfini est calculé sur la base du fait que ledit bloc batterie de véhicule électrique (101) présente un état SOC suffisant pour parcourir une distance de conduite prédéfinie.

6. Procédé selon la revendication 3, dans lequel ladite étape consistant à déterminer (301) si ladite perturbation est autorisée comprend en outre les étapes consistant à surveiller une température de bloc batterie en cours correspondant à un bloc batterie de véhicule électrique (101), à comparer ladite température de bloc batterie en cours à une plage de températures prédéfinie, et à autoriser ladite perturbation si ladite température de bloc batterie en cours est en dehors de ladite plage de températures prédéfinie.

7. Procédé selon l'une quelconque des revendications 1 à 6, comprenant en outre l'étape consistant à accepter ledit ensemble d'instructions de notification et à stocker ledit ensemble d'instructions de notification dans ladite mémoire (119), dans lequel un utilisateur applique en entrée ledit ensemble d'instructions de notification par l'intermédiaire d'une interface utilisateur en communication avec ledit contrôleur de système (117).

8. Procédé selon l'une quelconque des revendications 1 à 7, dans lequel ladite étape de transmission (213) dudit message de notification comprend en outre l'étape consistant à transmettre ledit message de notification par l'intermédiaire d'un système de communication RF par voie hertzienne, dans lequel ledit système de communication RF par voie hertzienne est sélectionné à partir du groupe constitué par des systèmes sans fil cellulaires et des systèmes sans fil par satellite, et dans lequel ladite étape de transmission dudit message de notification comprend en outre l'étape consistant à transmettre un message texte, un message électronique, ou un message verbal préenregistré.

9. Procédé selon l'une quelconque des revendications 1 à 7, dans lequel ladite étape de transmission (213) dudit message de notification comprend en outre l'étape consistant à publier ledit message de notification sur une page web.

10. Procédé selon l'une quelconque des revendications 1 à 7, dans lequel ladite étape de transmission (213) dudit message de notification comprend en outre l'étape consistant à transmettre ledit message de notification à un système de notification tiers.

11. Procédé selon l'une quelconque des revendications 1 à 7, dans lequel ladite étape de transmission (213) dudit message de notification comprend en outre l'étape consistant à activer un système d'alarme monté sur ledit véhicule électrique.

12. Système de notification utilisant un véhicule électrique et un procédé de notification selon l'une quelconque des revendications 1 à 11, comprenant :
un système de charge de véhicule électrique (103) pouvant être couplé à une source d'énergie (105), dans lequel ladite source d'énergie (105) est externe audit véhicule électrique, et dans lequel ladite source d'énergie (105) fournit une puissance de charge pour un bloc batterie (101) monté dans ledit véhicule électrique, ledit bloc batterie (101) fournissant de la puissance pour au moins un moteur d'organes de transmission (109) ;
un moniteur de source d'énergie (115) monté à l'intérieur dudit véhicule électrique et configuré de manière à surveiller un état de charge de bloc batterie, dans lequel ledit moniteur (115) détecte lorsque ladite source d'énergie (105) est couplée audit système de charge de véhicule électrique (103) ;
un contrôleur de système (117) couplé audit moniteur de source d'énergie (115), ledit contrôleur de système (117) étant configuré de manière à recevoir un premier signal d'état provenant dudit moniteur de source d'énergie (115) lorsque ladite source d'énergie (105) est couplée audit système de charge de véhicule électrique (103), et à recevoir un second signal d'état provenant dudit moniteur de source d'énergie (115) lorsqu'une perturbation du fonctionnement de ladite source d'énergie de système de charge de véhicule électrique (105) est détectée, dans lequel ledit contrôleur de système (117) est configuré de manière à émettre une commande de notification suite à la détection d'un changement dans ledit état de charge de bloc batterie (101), tel qu'attesté par la réception dudit second signal d'état suite à la réception dudit premier signal d'état, et dans lequel ledit contrôleur de système (117) est configuré de manière à émettre ladite commande de notification conformément à un ensemble d'instructions de notification ;
une mémoire (119) couplée audit contrôleur de système (117), dans lequel ladite mémoire stocke (119) ledit ensemble d'instructions de notification ; et
un système de notification (121) couplé audit contrôleur de système (117), dans lequel ledit système de notification (121) est configuré de manière à transmettre un message de notification à une partie située à l'extérieur dudit véhicule électrique, suite à la réception de ladite commande de notification émise par ledit contrôleur de système (117), **caractérisé en ce que** l'utilisateur est en mesure de prédéfinir le format de notification devant être utilisé, sur la base de l'emplacement du véhicule électrique, lequel correspond à une alarme locale si le véhicule électrique est dans le garage, et lequel correspond à une transmission sans fil du message de notification si le véhicule électrique n'est pas dans le garage.

13. Système de notification selon la revendication 12, dans lequel ledit ensemble d'instructions de notification inclut au moins un critère pour accepter ledit changement dudit état de charge de bloc batterie comme étant autorisé, et dans lequel ledit contrôleur de système (117) est configuré de manière à ne pas émettre une instruction de notification lorsque ledit changement dudit état de charge de bloc batterie est autorisé.

14. Système de notification selon la revendication 13, dans lequel ledit critère pour accepter ledit changement dudit état de charge de bloc batterie comme étant autorisé inclut au moins l'un des critères parmi une proximité de l'utilisateur par rapport audit véhicule électrique, la réalisation d'un état de charge de bloc batterie cible, et l'emplacement dudit véhicule électrique dans une zone sécurisée prédéfinie.
